# FASCICULE DE BREVET EUROPEEN

(11) **EP 0 289 410 B1**
(45) Date de publication et mention de la délivrance du brevet: **21.07.1993**
(21) Numéro de dépôt: 88400997.8
(22) Date de dépôt: 22.04.1988
(51) Int. Cl.: H01R 25/16

(54) **Socle d'appareil électrique pouvant prendre place dans une goulotte de passage de conducteurs**
Elektrischer Gerätesockel zum Aufstellen in einem Leitungsführungskanal
Base of an electrical apparatus to be placed in a wire raceway

(30) Priorité: 28.04.1987 FR 8706022
(43) Date de publication de la demande: 02.11.1988
(73) Titulaire: LEGRAND, F-87045 Limoges Cédex (FR)
(72) Inventeur: Marcou, Jean-Claude, Syracuse N.Y. 13221 (US); Buard, Yvon, F-53600 Voutre (FR)
(74) Mandataire: CABINET BONNET-THIRION

(56) Documents cités:
- EP-A- 0 109 876
- BE-A- 637 115
- DE-A- 3 113 679
- US-A- 1 531 309

## Description

La présente invention se rapporte à un socle d'appareil électrique et plus particulièrement à un tel socle conçu pour pouvoir prendre place dans une goulotte de passage de conducteurs.

Dans une installation électrique, il est fréquent de faire passer les conducteurs, que ce soit des conducteurs pour courants forts (pour l'alimentation des appareils d'éclairage ou de chauffage) ou encore des conducteurs pour courants faibles (lignes téléphoniques), dans une même goulotte en matière plastique à profil global en forme de U, fixée le long des murs. la goulotte est ensuite fermée par un couvercle longitudinal en forme de bande plate. Lorsqu'on désire installer un appareil électrique tel qu'un interrupteur, ou une prise de courant, il est commode de fixer cet appareil sur la goulotte elle-même. Pour ce faire, il est connu d'adapter une botte ouverte dans la goulotte, de la fixer à cette goulotte par tout moyen convenable et de rapporter ensuite l'appareil électrique sur la boîte qui forme ainsi un socle abritant les extrémités des fils reliés audit appareil électrique. Il est donc nécessaire de disposer de boîtes de différentes dimensions correspondant aux dimensions habituelles des appareils électriques qu'elles sont destinées à recevoir. En outre, lorsqu'on désire implanter plusieurs appareils électriques (prise de courant ou interrupteurs) côte à côte dans la goulotte, on utilise des bottes allongées, dont la longueur correspond au nombre d'appareils électriques placés côte à côte. Les utilisateurs doivent donc stocker un grand nombre de boîtes de dimensions différentes impliquant des frais de gestion non négligeables.

Le document US 1 531 309 décrit un socle comportant plusieurs éléments modulaires à profil en U susceptibles d'être assemblés entre eux côte à côte pour accueillir un nombre choisi d'appareils électriques.

L'un des buts de l'invention est de proposer un socle d'appareil électrique utilisable dans les conditions définies ci-dessus et qui puisse accueillir toutes sortes d'appareils électriques, de dimensions éventuellement diférentes et en nombre quelconque, tout en ne nécessitant le stockage que d'un nombre limité d'éléments différents (au maximum trois éléments) voire un seul élément.

Un autre but de l'invention est de faciliter le câblage des appareils électriques destinés à être fixés à ces boîtes.

Dans cet esprit, l'invention concerne essentiellement un socle d'appareil électrique adaptable dans une goulotte de passage de conducteurs, comportant au moins un élément modulaire à profil en U muni de moyens de fixation d'un tel appareil électrique et comportant une paroi de fond et deux parois latérales, chaque paroi latérale comportant une portion en retrait à l'une de ses extrémités, cet élément modulaire ayant ses deux autres faces ouvertes et les extrémités desdites parois latérales comportant des moyens d'accrochage de formes et dimensions propres à leur permettre de coopérer avec des moyens d'accrochage d'un autre élément modulaire et/ou d'un élément d'extrémité, les portions en retrait des deux parois latérales étant situées de part et d'autre d'un plan transversal médian dudit élément modulaire, caractérisé en ce que lesdits moyens d'accrochage sont définis par des nervures et/ou rainures pratiquées sur les faces externes desdites portions en retrait et sur les faces internes des autres extrémités desdites parois latérales et en ce que lesdites nervures et/ou rainures sont orientées perpendiculairement à ladite paroi de fond, certaines au moins desdites faces externes et desdites faces internes étant munies, chacune, de plusieurs nervures ou rainures parallèles.

Ainsi, l'élément modulaire qui constitue la partie essentielle du socle est dimensionné pour recevoir un appareil électrique. Il peut être assemblé avec d'autres éléments modulaires semblables, ce qui permet de placer côte à côte un nombre quelconque de tels appareils électriques. Le raccordement de ces derniers est facilité par le fait que les éléments d'extrémité qui matérialisent les parois transversales du socle, peuvent n'être rapportés qu'après le câblage. La présence de ces éléments d'extrémités n'est d'ailleurs pas indispensable, notamment lorsque les appareils électriques sont montés sur les moyens de fixation du ou des éléments modulaires. En revanche, ces éléments d'extrémité comportent eux-mêmes des moyens de fixation analogues, ce qui permet, le cas échéant, de monter un appareil électrique en le fixant entre deux éléments d'extrémité parallèles maintenus écartés l'un de l'autre par un élément modulaire précité.

L'invention sera mieux comprise et d'autres avantages de celle-ci apparaîtront plus clairement à la lumière de la description qui va suivre, donnée uniquement à titre d'exemple et faite en référence aux dessins annexés dans lesquels:
- la figure 1 est une vue en perspective éclatée d'un socle d'appareil électrique venant prendre place dans une goulotte de passage de conducteurs;
- la figure 2 montre le même socle en place dans ladite goulotte; et
- la figure 3 illustre un socle du même genre comportant deux éléments modulaires pour la fixation côte à côte de deux appareils électriques.

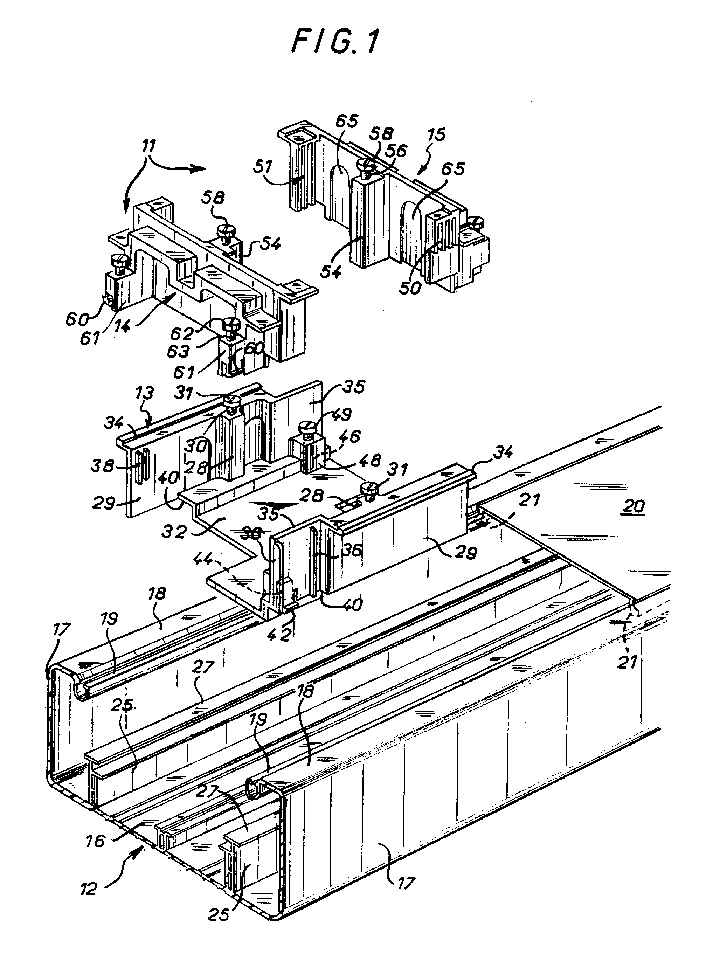

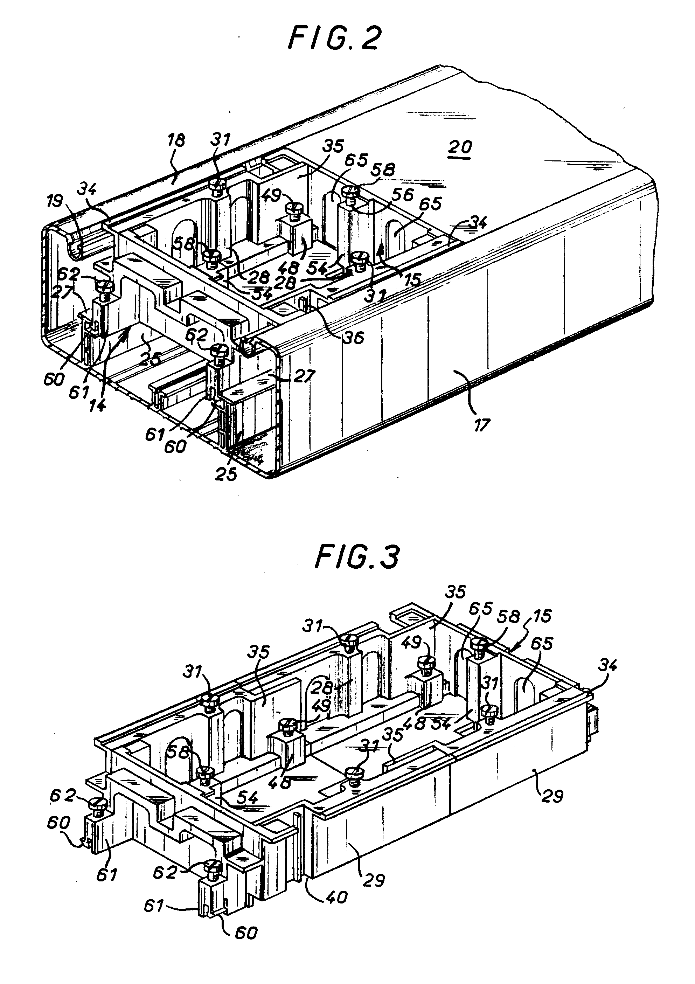

En se référant plus particulièrement aux figures 1 et 2, on a représenté un socle d'appareil électrique 11 en trois éléments, susceptible de prendre place dans une goulotte de passage de conducteurs 12. Le socle 11 se compose ici d'un élément modulaire 13 et de deux éléments d'extrémité 14, 15.

La goulotte 12 a un profil général en forme de U avec une paroi de fond 16, deux parois latérales 17 s'étendant longitudinalement et, globalement parallèles à la paroi de fond, deux rebords 18. Chaque rebord est muni d'une gorge 19. Le couvercle 20 comporte deux nervures 21 au voisinage de ses bords longitudinaux, susceptibles de s'encastrer ou de se glisser dans les gorges 19 de la goulotte. Celles-ci comportent en outre deux cloisons longitudinales 25, parallèles, s'élevant de la paroi de fond 16, perpendiculairement à celle-ci. Les cloisons 25 sont d'une hauteur inférieure à la profondeur de la goulotte. La fonction principale de ces cloisons est de permettre d'isoler certains conducteurs par rapport à d'autres, par exemple les conducteurs dans lesquels circulent des courants forts et les conducteurs dans lesquels circulent des courants faibles. Selon une particularité avantageuse dans le cadre de l'invention, chaque cloison 25 comporte, au voisinage de son bord supérieur, une nervure 27 s étendant perpendiculairement à la cloison elle-même. Dans l'exemple, cette nervure forme un méplat supérieur.

Le socle 11 proprement dit comporte au moins un élément modulaire 13. Celui-ci a un profil général en U et il est muni de moyens de fixation d'un appareil électrique (non représenté) constitués ici par deux colonnettes 28 venues de moulage avec les deux parois latérales 29 dudit élément modulaire. Chaque colonnette comporte un trou taraudé 30 recevant une vis 31 pour la fixation dudit appareil. Les deux parois latérales 29, destinées à être positionnées parallèlement aux parois 17 de la goulotte, sont réunies à une paroi de fond 32. Les deux autres faces de l'élément modulaire sont ouvertes. Chaque paroi latérale 29 comporte un rebord 34, dirigé vers l'extérieur. Ces rebords sont susceptibles de coopérer avec les bords longitudinaux de la goulotte 12 pour le positionnement et le maintien de l'élément modulaire à l'intérieur de celle-ci. Plus particulièrement, les deux rebords 34, parallèles, viennent s'encastrer au-dessus des gorges 19 en lieu et place du couvercle 20. De plus, les extrémités des parois latérales 29 comportent des moyens d'accrochage de formes et dimensions propres à leur permettre de coopérer avec des moyens d'accrochage semblables d'un autre élément modulaire 13 (figure 3) et/ou d'un élément d'extrémité 14 ou 15. Pour ce faire, chaque paroi latérale 29 comporte une portion en retrait 35 à l'une de ses extrémités. Comme le montre clairement la figure 1, les deux portions en retrait 35 des deux parois latérales 29 sont situées de part et d'autre d'un plan transversal médian de l'élément modulaire, c'est-à-dire un plan passant par les axes des colonnettes 28. Par ailleurs, les moyens d'accrochage précités sont plus particulièrement définis par des nervures 36 et/ou des rainures 38 respectivement pratiquées sur les faces externes des portions en retrait 35 et sur les faces internes des autres extrémités des parois latérales 29. Ces nervures et/ou rainures sont orientées perpendiculairement à la paroi de fond 32 de l'élément modulaire. Plus précisément, on remarque qu'une rainure 38 s'inscrit en fait en relief sur la paroi latérale 29, étant matérialisée par deux nervures très rapprochées. Ladite rainure 38, ouverte à sa partie supérieure, est donc susceptible d'accueillir une nervure 36 d'un autre élément modulaire. Les portions en retrait 35 sont définies de telle sorte que l'une des nervures 36 qu'elles portent puisse venir se glisser dans une rainure 38 d'un élément modulaire voisin. On peut ainsi allonger à volonté, le socle, dans la direction longitudinale de la goulotte, ce qui permet de monter dans la goulotte un nombre quelconque d'appareils électriques, chacun d'entre eux étant fixé au moyen de deux vis 31 entre les deux colonnettes 28 d'un même élément modulaire. La paroi de fond 32 comporte deux épaulements longitudinaux 40, parallèles, susceptibles de venir reposer sur les bords supérieurs des cloisons 25 et plus particulièrement sur les nervures 27 formant méplats de celles-ci.

Par ailleurs, chaque élément modulaire 13 comporte deux ergots élastiques 42, faisant saillie latéralement sous les portions en retrait 35. Ces ergots sont venus de moulage avec l'élément modulaire. Lorsque ce dernier est emboîté à force dans la goulotte, ils viennent prendre place sous les nervures 27 et assurent ainsi le verrouillage dudit élément modulaire dans la goulotte. Un espace 44 est défini à l'arrière de chaque ergot 42 et un trou taraudé 46 défini dans une petite colonnette interne 48 débouche dans cet espace 44. L'ergot 42 comporte par ailleurs, un bossage arrière ou analogue placé de telle façon qu'il puisse être repoussé latéralement par une vis 49 engagée dans le trou taraudé 46. Sous l'action de cette vis, l'ergot 42 pivote vers la nervure 27, ce qui assure l'immobilisation définitive de l'élément modulaire 13 dans la goulotte.

Par ailleurs, le ou les éléments modulaires 13 assemblés côte à côte dans la goulotte sont éventuellement complétés par les deux éléments d'extrémité 14 et 15 définissant chacun une cloison transversale susceptible de se monter en regard d'une face ouverte d'un élément modulaire 13. Pour ce faire, chaque élément d'extrémité comporte aussi des nervures et/ou rainures 50, 51 coopérant avec celles d'un élément modulaire. Dans l'exemple représenté, on a prévu plusieurs rainures côte à côte, permettant de faire varier de quelques millimètres la position de l'élément d'extrémité par rapport à l'élément modulaire auquel il est assemblé. Les raisons de cet agencement seront expliquées en détail plus loin. Par ailleurs, les éléments d'extrémité 14, 15 comportent eux aussi des moyens de fixation d'un appareil élecrique, à savoir, comme pour chaque élément modulaire, des colonnettes 54, venues de moulage, chaque colonnette comportant un trou taraudé 56 susceptible de recevoir une vis de fixation 58.

D'autre part, comme pour les éléments modulaires, chaque élément d'extrémité comporte des ergots élastiques 60 susceptibles de coopérer avec une nervure 27 d'une cloison 25 de la goulotte 12, pour la fixation par emboîtage à force de l'élément d'extrémité correspondant. Ainsi, chaque ergot 60 est venu de moulage à la partie inférieure d'une petite colonnette 61 faisant saillie de la face extérieure de l'élément d'extrémité 14 ou 15. Comme pour l'élément modulaire, un espace est défini à l'arrière de chaque ergot 60 et ledit ergot comporte un bossage ou analogue susceptible d'être repoussé latéralement par une vis 62 engagée dans un trou taraudé 63 débouchant dans ledit espace. Cet agencement permet de faire pivoter l'ergot vers la nervure et par conséquent, d'assurer le montage définitif de l'élément d'extrémité correspondant dans la goulotte 12. Chaque élément d'extrémité 14 ou 15 comporte des voiles défonçables 65, pour le passage des conducteurs destinés à être raccordés aux appareils électriques montés sur le socle.

La mise en oeuvre d'un tel socle est des plus simples et découle avec évidence de la description qui précède.

Si on désire mettre en place un ou plusieurs appareils électriques en un emplacement donné de la goulotte, il suffit d'emboîter un ou plusieurs éléments modulaires 13 dans cette goulotte, en engageant au moment de leur assemblage, l'une des nervures 36 d'un élément modulaire dans une rainure 38 de l'élément modulaire voisin. Les portions en retrait 35 définies dans ces éléments modulaires permettent de faire correspondre une face interne d'une paroi 29 à une face externe d'une autre paroi 29 d'un élément modulaire voisin et, ce faisant, d'imbriquer longitudinalement lesdits éléments modulaires les uns à côté des autres. Le fait de faire correspondre une nervure 36 choisie avec une rainure 38 permet d'adapter la dimension longitudinale du socle, ce qui permet, à partir des mêmes éléments, de monter des appareils électriques de dimensions différentes, pour tenir compte notamment des normes en vigueur dans différents pays. Par conséquent, les utilisateurs n'ont à stocker que trois types d'éléments différents pour faire face à toutes les situations possibles.

Le ou les éléments modulaires sont ensuite définitivement fixés, par serrage au moyen des vis 49. Le socle, ainsi en partie installé, reste ouvert à ses deux extrémités longitudinales, ce qui permet de câbler les appareils électriques avec une grande facilité. Si ces appareils électriques sont orientés de telle façon qu'ils puissent être fixés, chacun, entre deux vis 31 opposées d'un même élément modulaire, le montage des éléments d'extrémité, quoique recommandé, n'est pas indispensable. Ceux-ci peuvent, en tous cas, être mis en place et fixés après câblage des appareils électriques, et de la même façon que les éléments modulaires, c'est-à-dire par emboîtage à force suivi d'un serrage au moyen des vis 62. Certains voiles 65 sont défoncés avant la mise en place des éléments d'extrémité, pour le passage des conducteurs. Là encore, la structure des rainures et/ou nervures 50, 51 permet une adaptation de longueur en fonction des appareils électriques.

Dans l'hypothèse où l'orientation de l'appareil électrique dans la goulotte ne permet pas d'utiliser les vis de fixation 31 (ce qui est souvent le cas lorsque ladite goulotte est orientée verticalement) l'appareil électrique est alors monté entre deux colonnettes 54 appartenant à deux éléments d'extrémité 14, 15, au moyen de deux vis 58. Dans ce cas, les éléments d'extrémité 14, 15 sont indispensables et ils sont généralement montés de part et d'autre d'un unique élément modulaire 13.

## Revendications

1. Socle d'appareil électrique adaptable dans une goulotte de passage de conducteurs, comportant au moins un élément modulaire (13) à profil en U muni de moyens de fixation (28, 30, 31) d'un tel appareil électrique et comportant une paroi de fond (32) et deux parois latérales (29), chaque paroi latérale comportant une portion en retrait (35) à l'une de ses extrémités, cet élément modulaire ayant ses deux autres faces ouvertes et les extrémités desdites parois latérales comportant des moyens d'accrochage (36, 38) de formes et dimensions propres à leur permettre de coopérer avec des moyens d'accrochage d'un autre élément modulaire et/ou d'un élément d'extrémité (14, 15), les portions en retrait des deux parois latérales étant situées de part et d'autre d'un plan transversal médian dudit élément modulaire, caractérisé en ce que lesdits moyens d'accrochage sont définis par des nervures (36) et/ou rainures (38) pratiquées sur les faces externes desdites portions en retrait (35) et sur les faces internes des autres extrémités desdites parois latérales (29) et en ce que lesdites nervures et/ou rainures sont orientées perpendiculairement à ladite paroi de fond (32), certaines au moins desdites faces externes et desdites faces internes étant munies, chacune, de plusieurs nervures ou rainures parallèles.

2. Socle d'appareil électrique selon la revendication 1, caractérisé en ce que les moyens de fixation d'un appareil électrique précités sont constitués par des colonnettes (28) venues de moulage avec lesdites parois latérales (29), chaque colonnette comportant un trou taraudé (30).

3. Socle d'appareil électrique selon la revendication 1 ou 2, pour montage dans une goulotte de passage de conducteurs comportant deux cloisons longitudinales (25) parallèles s'élevant d'une paroi de fond (16) de ladite goulotte, perpendiculairement à celle-ci, lesdites cloisons étant d'une hauteur inférieure à la profondeur de ladite goulotte, caractérisé en ce que ledit élément modulaire comporte à sa face inférieure deux épaulements (40) longitudinaux susceptibles de venir reposer sur les bords supérieurs desdites cloisons longitudinales (25), respectivement.

4. Socle d'appareil électrique selon la revendication 3, pour montage dans une goulotte dans laquelle chaque cloison longitudinale précitée est munie d'une nervure (27), caractérisé en ce que ledit élément modulaire comporte des ergots élastiques (42), de préférence venus de moulage, coopérant avec cette nervure pour la fixation par emboîtage à force dudit élément modulaire.

5. Socle d'appareil électrique selon la revendication 4, caractérisé en ce qu'un trou taraudé (46) débouche dans un espace défini à l'arrière de chaque ergot (42) et en ce que cet ergot comporte un bossage ou analogue susceptible d'être repoussé latéralement par une vis (49) engagée dans ledit trou taraudé, pour faire basculer ledit ergot vers ladite nervure.

6. Socle d'appareil électrique selon l'une des revendications précédentes, caractérisé en ce qu'il comporte en outre des éléments d'extrémité (14, 15) précités formant des cloisons transversales susceptibles de se monter, chacune, en regard d'une face ouverte d'un élément modulaire précité.

7. Socle d'appareil électrique selon l'ensemble des revendications 1 à 6, caractérisé en ce que les éléments d'extrémités précités comportent des nervures et/ou rainures (50, 51) coopérant avec celles d'un élément modulaire.

8. Socle d'appareil électrique selon la revendication 6 ou 7, caractérisé en ce que ces éléments d'extrémités comportent des moyens de fixation (54, 56, 58) d'un appareil électrique.

9. Socle d'appareil électrique selon l'une des revendications 4 à 8, caractérisé en ce que chaque élément d'extrémité comporte des ergots élastiques (60), de préférence venus de moulage, coopérant avec une nervure (27) d'une cloison longitudinale (25) précitée pour la fixation par emboîtage à force dudit élément d'extrémité.

10. Socle d'appareil électrique selon la revendication 9, caractérisé en ce qu'un trou taraudé (46) débouche dans un espace défini à l'arrière de chaque ergot (60) de l'élément d'extrémité et en ce que cet ergot comporte un bossage ou analogue susceptible d'être repoussé latéralement par une vis (49) engagée dans ledit trou taraudé, pour faire basculer ledit ergot vers ladite nervure.

11. Socle d'appareil électrique selon la revendication 8, caractérisé en ce que ces moyens de fixation sont constitués par des colonnettes (54) comportant chacune un trou taraudé (56), chaque colonnette étant de préférence venue de moulage avec un tel élément d'extrémité.

12. Socle d'appareil électrique selon la revendication 1 ou 7, caractérisé en ce que chaque élément modulaire et/ou élément d'extrémité comporte plusieurs nervures et/ou rainures (36, 38, 50, 51) précitées à au moins certaines de ses extrémités, pour permettre des adaptations de longueur dudit socle.

## Claims

1. A base for an electrical device, which can be fitted into a channel for the passage of conductors, comprising at least one modular element (13) of U-shaped profile, provided with means (28, 30, 31) for fixing such an electrical device and comprising a bottom wall (32) and two side walls (29), each side wall comprising a set-back portion (35) at one of its ends, said modular element having its other two faces open and the ends of said side walls comprising latching bans (36, 38) of suitable shapes and sizes to permit them to co-operate with latching means of another modular element and/or an end element (14, 15), the set-back portions of the two side walls being disposed on respective sides of a transverse median plane of said modular element, characterised in that said latching means are defined by ribs (36) and/or grooves (38) provided on the external faces of said set-back portions (35) and on the internal faces of the other ends of said side walls (29) and that said ribs and/or grooves are oriented perpendicularly to said bottom wall (32), some at least of said external faces and internal faces each being provided with a plurality of parallel ribs or grooves.

2. An electrical device base according to claim 1 characterised in that said means for fixing an electrical device are formed by column portions (28) which are moulded with said side walls (29), each column portion comprising a screwthreaded hole (30).

3. An electrical device base according to claim 1 or claim 2 for mounting in a channel for the passage of conductors comprising two parallel longitudinal partitions (25) which extend upwardly from a bottom wall (16) of said channel perpendicularly thereto, said partitions being of a height which is less than the depth of said channel, characterised in that at its lower face said modular element comprises two longitudinal shoulders (40) which are capable of coming to bear on the upper edges of said longitudinal partitions (25) respectively.

4. An electrical device base according to claim 3 for mounting in a channel in which each said longitudinal partition is provided with a rib (27), characterised in that said modular element comprises resilient lugs (42) which are preferably produced by moulding and which co-operate with said rib for fixing said modular element by forcible engagement.

5. An electrical device base according to claim 4 characterised in that a screwthreaded hole (46) opens into a space defined rearwardly of each lug (42) and that said lug comprises a boss portion or the like capable of being laterally pushed back by a screw (49) which is engaged into said screwthreaded hole, to cause said lug to pivot towards said rib.

6. An electrical device base according to one of the preceding claims characterised in that it further comprises said end elements (14, 15) forming transverse partitions which are each capable of being mounted facing an open face of a said modular element.

7. An electrical device base according to all of claims 1 to 6 characterised in that said end elements comprise ribs and/or grooves (50, 51) co-operating with those of a modular element.

8. An electrical device base according to claim 6 or claim 7 characterised in that said end elements comprise means (54, 56, 58) for fixing an electrical device.

9. An electrical device base according to one of claims 4 to 8 characterised in that each end element comprises resilient lugs (60) which are preferably produced by moulding and which co-operate with a rib (27) of a said longitudinal partition (25) for fixing said end element by forcible engagement.

10. An electrical device base according to claim 9 characterised in that a screwthreaded hole (46) opens into a space defined rearwardly of each lug (60) of the end element and that said lug comprises a boss portion or the like capable of being pushed back laterally by a screw (49) engaged into said screwthreaded hole, to cause said lug to pivot towards said rib.

11. An electrical device base according to claim 8 characterised in that said fixing means are formed by column portions (54) each comprising a screwthreaded hole (56), each column portion preferably being moulded with such an end element.

12. An electrical device base according to claim 1 or claim 7 characterised in that each modular element and/or end element comprises a plurality of said ribs and/or grooves (36, 38, 50, 51) at at least some of its ends, to permit adaptations in respect of length of said base.

## Patentansprüche

1. Elektrischer Gerätesockel zum Einsetzen in eine Rinne zur Durchführung von Leitern, der wenigstens ein Modulelement (13) mit U-Profil umfaßt, das mit Mitteln (28, 30, 31) zur Befestigung eines solchen elektrischen Geräts versehen ist und eine Bodenwand (32) und zwei seitliche Wände (29) umfaßt, deren jede einen zurückversetzten Abschnitt (35) an einem ihrer Enden umfaßt, wobei dieses Modulelement an seinen beiden anderen Seiten offen ist, die Enden der seitlichen Wände Einhakmittel (36, 38) umfassen, deren Formen und Abmessungen ihnen gestatten, mit Einhakmitteln eines anderen Modulelements und/oder eines Endelements (14, 15) zusammenzuwirken, und die zurückversetzten Abschnitte der beiden seitlichen Wände zu beiden Seiten einer Mittelquerebene des Modulelements angeordnet sind, dadurch gekennzeichnet, daß die Einhakmittel von Rippen (36) und/oder Nuten (38) gebildet sind, die auf den Außenseiten der zurückversetzten Abschnitte (35) und auf den Innenseiten der anderen Enden der seitlichen Wände (29) vorgesehen sind, und daß die Rippen und/oder Nuten senkrecht zu der Bodenwand (32) gerichtet sind, wobei wenigstens manche dieser Außenseiten und dieser Innenseiten jeweils mit mehreren parallelen Rippen oder Nuten versehen sind.

2. Elektrischer Gerätesockel nach Anspruch 1, dadurch gekennzeichnet, daß die Mittel zur Befestigung eines elektrischen Geräts aus mit den seitlichen Wänden (29) mitgeformten Säulen (28) bestehen, deren jede eine Gewindebohrung (30) aufweist.

3. Elektrischer Gerätesockel nach Anspruch 1 oder 2 zur Montage in einer Rinne zur Durchführung von Leitern, die zwei parallele Längstrennwände (25) umfaßt, die sich von einer Bodenwand (16) der Rinne senkrecht zu dieser erheben und deren Höhe kleiner als die Tiefe der Rinne ist, dadurch gekennzeichnet, daß das Modulelement an seiner Unterseite zwei Längsschultern (40) besitzt, die jeweils auf den oberen Rändern der Längstrennwände (25) zum Aufliegen kommen können.

4. Elektrischer Gerätesockel nach Anspruch 3 für die Montage in einer Rinne, in der jede Längstrennwand mit einer Rippe (27) versehen ist, dadurch gekennzeichnet, daß das Modulelement vorzugsweise mitgeformte elastische Nasen (42) besitzt, die mit dieser Rippen zur Befestigung des Modulelements durch Einstecken unter Kraft zusammenwirken.

5. Elektrischer Gerätesockel nach Anspruch 4, dadurch gekennzeichnet, daß eine Gewindebohrung (46) in einen hinter jeder Nase (42) abgegrenzten Raum ausmündet und daß diese Nase eine Erhebung oder dergl. besitzt, die seitlich durch eine in die Gewindebohrung eingeführte Schraube (49) zurückgedrückt werden kann, um die Nase auf die Rippe zu kippen zu lassen.

6. Elektrischer Gerätesockel nach einem der vorhergehenden Ansprüche, dadurch gekennzeichnet, daß er außerdem Endelemente (14, 15) besitzt, die Quertrennwände bilden, die jeweils gegenüber einer offenen Seite eines Modulelements montiert werden können.

7. Elektrischer Gerätesockel nach einem der Ansprüche 1 bis 6, dadurch gekennzeichnet, daß die Endelemente Rippen und/oder Nuten (50, 51) umfassen, die mit denen eines Modulelements zusammenwirken.

8. Elektrischer Gerätesockel nach Anspruch 6 oder 7, dadurch gekennzeichnet, daß die Endelemente Mittel (54, 56, 58) zur Befestigung eines elektrischen Geräts besitzen.

9. Elektrischer Gerätesockel nach einem der Ansprüche 4 bis 8, dadurch gekennzeichnet, daß jedes Endelement vorzugsweise mitgeformte elastische Nasen (60) besitzt, die mit einer Rippe (27) einer Längstrennwand (25) für die Befestigung des Endelements durch Einstecken unter Kraft zusammenwirken.

10. Elektrischer Gerätesockel nach Anspruch 9, dadurch gekennzeichnet, daß eine Gewindebohrung (46) in einen hinter jeder Nase (60) des Endelements abgegrenzten Raum ausmündet und daß diese Nase eine Erhebung oder dergl. besitzt, die seitlich durch eine in die Gewindebohrung eingeführte Schraube (49) zurückgedrückt werden kann, um die Nase auf die Rippe zu kippen zu lassen.

11. Elektrischer Gerätesockel nach Anspruch 8, dadurch gekennzeichnet, daß die Befestigungsmittel aus Säulen (54) bestehen, die jeweils eine Gewindebohrung (56) aufweisen und deren jede vorzugsweise mit einem solchen Endelement mitgeformt ist.

12. Elektrischer Gerätesockel nach Anspruch 1 oder 7, dadurch gekennzeichnet, daß jedes Modulelement und/oder Endelement mehrere Rippen und/oder Nuten (36, 38, 50, 51) an wenigstens einigen seiner Enden besitzt, um Längenanpassungen des Sockels zu gestatten.
